(19) Europäisches Patentamt

European Patent Office

Office européen des brevets

(11) Veröffentlichungsnummer: **0 317 704 B1**

# (12) EUROPÄISCHE PATENTSCHRIFT

(45) Veröffentlichungstag der Patentschrift: **15.04.92**

(21) Anmeldenummer: **88111538.0**

(22) Anmeldetag: **18.07.88**

(51) Int. Cl.⁵: **A61C  1/00**, G05D 23/13

---

(54) **Zahnärztliche Einrichtung mit einer Regeleinrichtung zur Konstanthaltung der Temperatur von erwärmtem Wasser.**

---

(30) Priorität: **25.11.87 DE 3739970**

(43) Veröffentlichungstag der Anmeldung:
**31.05.89 Patentblatt  89/22**

(45) Bekanntmachung des Hinweises auf die
Patenterteilung:
**15.04.92 Patentblatt  92/16**

(84) Benannte Vertragsstaaten:
**DE FR IT**

(56) Entgegenhaltungen:
EP-A- 0 187 378        DE-A- 1 947 015
FR-A- 714 947          FR-A- 2 569 814
US-A- 3 169 318        US-A- 3 346 957
US-A- 3 898 737

PRODUCT ENGINEERING, Band 42, Nr. 17, Dezember 1971, Seite 17; "Bellows asembly acts as valve to control thermal mix of liquids"

(73) Patentinhaber: **SIEMENS AKTIENGESELL-
SCHAFT
Wittelsbacherplatz 2
W-8000 München 2(DE)**

(72) Erfinder: **Bayer, Winfried, Dipl.-Ing. (FH)
Rothenberger-Weg 29
W-6948 Waldmichelbach(DE)**
Erfinder: **Kratochwilla, Hans-Michael
Ziegelhüttenstrasse 6
W-6143 Lorsch(DE)**

---

EP 0 317 704 B1

**Beschreibung**

Die Erfindung bezieht sich auf eine zahnärztliche Einrichtung mit einer Regeleinrichtung zur Konstanthaltung der Temperatur von erwärmtem Wasser, welches über Zuleitungen zu diversen Verbrauchern, insbesondere zu zahnärztlichen Instrumenten, geleitet wird.

Bei zahnärztlichen Einrichtungen wird etwa auf Körpertemperatur erwärmtes Wasser unter anderem zum Spülen und/oder Kühlen der Präparationsstelle bei Bohr- und Schleifarbeiten sowie als Spülwasser für Mundglasfülleinrichtungen gebraucht. Es ist anzustreben, das erwärmte Wasser auf konstanter Temperatur zu halten.

Aus der US-A-31 69 318 und US-A-33 46 957 sind zahnärztliche Einrichtungen bekannt, bei denen Wasser mittels eines in einem Gehäuse nach Art eines Durchlauferhitzers angeordneten elektrischen Heizstabes erwärmt wird. Die Heizeinrichtung ist in der Regel mit einem Thermoelement in Form eines Bimetallreglers gekuppelt, welcher den Heizstab bei Erreichen einer vorgegebenen Wassertemperatur abschaltet und bei Unterschreiten einer bestimmten Temperatur wieder einschaltet.

Eine solche Warmwasserbereitung hat u.a. den Nachteil, daß sich die Wassertemperatur nur in sehr weiten Grenzen regeln läßt. Messungen haben ergeben, daß bei Durchflußmengen von etwa 200 cm³/min die Regelgenauigkeit bei ± 7°C liegt. Es ist ist verständlich, daß in Anbetracht der möglichst genau einzuhaltenden, der Körpertemperatur entsprechenden Wassertemperatur die sich mit einer solchen relativ ungenauen Regelung ergebenden Wassertemperaturen für den Patienten unzumutbar sind.

Ein weiterer Nachteil ist darin zu sehen, daß mit der bekannten Warmwasserbereitung meist keine variable, insbesondere spontan änderbare Temperatureinstellung möglich ist, wie dies aber z.B. bei zahnärztlichen Instrumenten notwendig ist, die eine gewisse Eigenerwärmung durch in ihnen enthaltene Antriebe (Elektromotor, Ultraschallschwinger, etc.) erfahren und die deshalb mit Kühlflüssigkeiten versorgt werden müssen, die eine niedrigere Temperatur haben als die Kühlflüssigkeiten, die für andere Instrumente oder zum Mundspülen angeboten werden.

Aus der allgemeinen Wasserinstallationstechnik sind ferner Thermostatventile zum Mischen von Heiß- und Kaltwasser bekannt. Bei einem bekannten solchen Thermostatventil (EP-A3-0 187 378, die den nächstliegenden Stand der Technik bildet) umfaßt das Ventil Zuflußöffnungen für Heiß- und Kaltwasser sowie ein in einem länglichen Hohlraum des Ventilkörpers kolbenartig bewegbar angeordnetes Regelglied, welches zwischen der Heiß- und Kaltwasserzuflußöffnung gegenüber dem umgebenden Ventilkörper abgedichtet ist und die eingestellten Mengen Heiß-und Kaltwasser in eine hinter dem Regelglied angeordnete Mischkammer leitet, aus der dann das Wasser entnommen werden kann, wobei auf das Regelglied ein der Mischtemperatur des Wassers ausgesetztes Thermostatglied wirkt. Das Regelglied ist so geformt, daß es bei axialer Verschiebung ringförmige Drosselöffnungen für Kalt- und Heißwasser freigibt. Die gewünschte Wassertemperatur kann mittels eines Drehknopfes, der die Stellung des Thermostatgliedes beeinflußt, manuell eingestellt werden, indem über eine in den Ventilkörper eingreifende Gewindespindel des Drehknopfes das Thermostatglied bei Drehen des Knopfes axial verschoben wird.

Der im Anspruch 1 angegebenen Erfindung liegt die Aufgabe zugrunde, eine Einrichtung der eingangs genannten Gattung zu verbessern; insbesondere soll eine Möglichkeit geschaffen werden, Warmwasser in den eingangs erwähnten, relativ kleinen Volumenströmen, wie sie insbesondere für zahnärztliche Instrumente gebraucht werden, mit unterschiedlicher, genau einstellbarer Mischtemperatur bereitzustellen und nach Bereitstellung konstant halten zu können.

Mit der erfindungsgemäß vorgeschlagenen Regeleinrichtung kann mit Vorteil in Abhängigkeit von der Benutzung der Verbraucher, die bei zahnärztlichen Instrumenten bei deren Entnahme aus ihren Ablagevorrichtungen und im Anwendungsfall bei Mundglasfülleinrichtungen mit dem Einschalten des den Wasserzulauf steuernden Ventils gegeben ist, die Mischtemperatur spontan auf definierte, dem jeweiligen Verbraucher zugeordnete Werte eingestellt und auf diese Werte konstant gehalten werden.

Die Temperaturen lassen sich dabei in einem Regelbereich von ± 1°C konstant halten. Die Regelfunktion ist auch bei extrem kleinen Volumenströmen in der Größenordnung von 20 bis 80 ml/min mit der angegebenen Genauigkeit möglich. Diese Regelgenauigkeit kann auch bei verschieden angesteuerter Temperatur gehalten werden.

Vorteilhafte Ausgestaltungen und Weiterbildungen der Erfindung sind in den Unteransprüchen enthalten. Mehrere Ausführungsbeispiele werden anhand der Zeichnung näher erläutert. Es zeigen:

Fig. 1        eine schematische Darstellung der erfindungsgemäßen Einrichtung,

Fig. 2 bis 8     verschiedene Ausführungsformen der Regeleinrichtung.

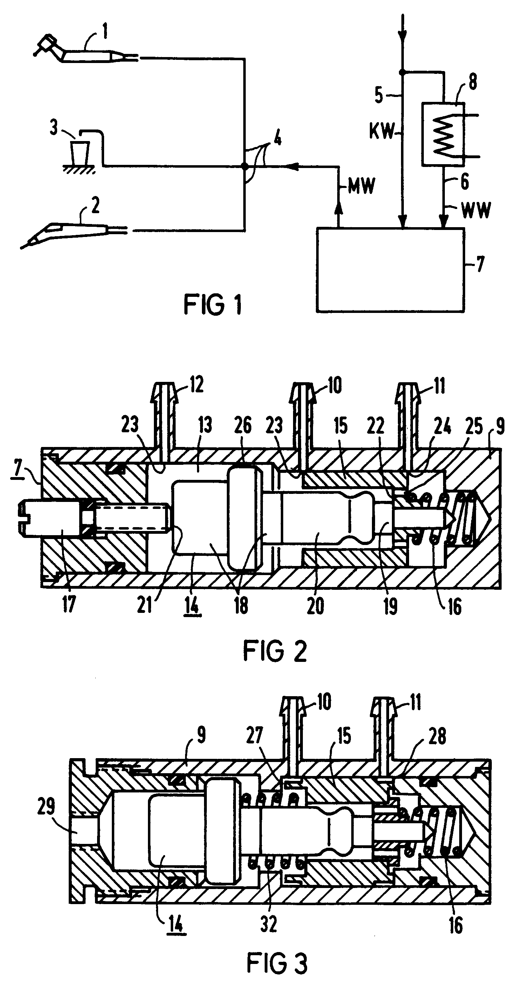

Die Figur 1 zeigt in einer Übersichtsdarstellung eine zahnärztliche Einrichtung, die beispielsweise Teil eines zahnärztlichen Gerätes (unit) sein kann. Die Einrichtung enthält zwei Instrumente 1, 2 sowie eine Mundglasfülleinrichtung 3, denen über Leitungen 4 auf Körpertemperatur erwärmtes Wasser zugeführt wird. Das erwärmte Wasser, im nachfolgenden mit Mischwasser (MW) bezeichnet, wird gebildet durch Mischen von Kaltwasser (KW) und Warmwasser (WW), welches über Leitungen 5 und 6 einer Regeleinrichtung 7 zugeführt wird. Mit 8 ist eine Heizeinrichtung bezeichnet, die in bekannter Weise nach Art eines Durchlauferhitzers ausgebildet ist und Warmwasser in einer beliebigen, oberhalb der Körpertemperatur liegenden Temperatur bereitstellt.

Der Aufbau der Regeleinrichtung 7 ist aus Figur 2 ersichtlich. Die Regeleinrichtung enthält ein Gehäuse 9 mit einander benachbarten Anschlüssen 10 und 11, die mit den Kalt- und Warmwasserleitungen 5 und 6 verbunden sind sowie einen mit den Leitungen 4 verbundenen Anschluß 12 für den Austritt des Mischwassers. Das Gehäuse 9 enthält eine im Durchmesser abgestufte Kammer 13, eine Regelpatrone 14, einen Schieber 15, eine Druckfeder 16 und ein Einstellglied 17.

Die Regelpatrone 14 besteht aus zwei in Richtung ihrer Längsausdehnung gesehen relativ zueinander bewegbaren Teilen, nämlich einem mit einem Dehnstoff, z.B. einer Wachsfüllung, gefüllten Dehnstoffkörper 18 und einem relativ zu diesem axial beweglichen Dorn 19. Letzterer dient als Stellglied für den Schieber 15. Der Dorn 19 ist mit dem im Innern des Dehnstoffkörpers 18 angeordneten Dehnstoff, der sich bei Erwärmung ausdehnt und bei Abkühlung zusammenzieht, verbunden. Zum Ausgleich für die Relativbewegung zwischen Dehnstoffkörper 18 und Dorn 19 dient eine mit 20 bezeichnete gummielastische Tülle. Nachdem weitergehende Details, insbesondere der konstruktive Aufbau der Regelpatrone für die Erfindung nicht wesentlich ist, wird davon abgesehen, diese näher zu beschreiben.

Die Regelpatrone 14 ist in der Kammer 13 so angeordnet, daß der den Dehnstoff beinhaltende Dehnstoffkörper 18 benachbart dem Mischwasserausgang 12 und der relativ zum Dehnstoffkörper 18 bewegliche Dorn 19 den Kalt- und Warmwasseranschlüssen 10, 11 zugewandt zu liegen kommt. Das Einstellglied 17 ist als Stellschraube ausgebildet und bildet einen Anschlag 21 für das stirnseitige Ende des Dehnstoffkörpers 18. Ein weiterer Anschlag 22 wird gebildet durch eine Abstufung im Dorn 19, an dem eine Schulter des Schiebers 15 anliegt. Die Druckfeder 16, die sich einerseits im Gehäuse 9 und andererseits am Schieber 15 abstützt, sorgt dafür, daß die Regelpatrone stets am Anschlag 21 anliegt.

Im dargestellten Ausführungsbeispiel bestimmt der Schieber 15 mit seinen peripheren Wandungen die Schließ- bzw. Offenstellung der radial in die Kammer 13 einmündenden Zulauföffnungen 23, 24 für das Kalt- und Warmwasser. Das über die Zulauföffnung 24 einströmende Warmwasser wird durch einen oder mehrere Längskanäle 25 in denjenigen Kammerteil, in den das Kaltwasserteil einströmt, geleitet. Das danach mit Kaltwasser vermischte, erwärmte Wasser (Mischwasser) kann über einen Ringspalt 26 in den austrittsseitigen Kammerteil übertreten, wo es nach vollständiger Umspülung des Dehnstoffkörpers 18 über den Anschluß 12 schließlich ausströmen kann.

Mittels des Einstellgliedes 17 läßt sich die Regelpatrone und damit der Schieber in der Kammer 13 so positionieren, daß sich bei einem bestimmten Querschnitt an den Zulauföffnungen 23, 24 und damit bei einem bestimmten Anteil des einströmenden Kalt-und Warmwasseranteils eine bestimmte, an sich frei wählbare Mischtemperatur ergibt. Sollte sich aus irgendwelchen Gründen die Temperatur des zugeführten Warmwassers erhöhen, z.B. weil das Heizelement 8 stärker als vorgesehen aufheizt, so würde sich im Bereich des Dehnstoffkörpers 18 eine höhere Mischtemperatur ergeben. Eine höhere Mischtemperatur hat aber sofort eine Ausdehnung des im Dehnstoffkörper 18 befindlichen Dehnstoffes zur Folge, wodurch sich der Dorn 19 entgegen der Wirkung der Druckfeder 16 axial (in der Zeichnung nach rechts) bewegen würde. Durch die Axialbewegung des Schiebers 15 wird der Querschnitt der Öffnung 24 für den Zulauf des Warmwassers verringert, dagegen der für das Kaltwasser vergrößert. Die Folge davon ist, daß die zuvor erhöhte Mischtemperatur sofort wieder auf die vorher eingestellte Temperatur zurückgeht. Mit Hilfe des Einstellgliedes 17 kann die Temperatur des Mischwassers induviduell eingestellt oder auch spontan verändert werden.

Die Figur 3 zeigt eine Ausführungsform, bei der das Mischungsverhältnis von Kalt- und Warmwasser nicht direkt über eine Querschnittsänderung an den Öffnungen 23, 24, sondern über radial in die Kammer mündende Ringspalte 27, 28 bestimmt wird, die in axialer Richtung veränderbar sind. Der Schieber (15) stützt sich hierzu mittels einer weiteren Druckfeder 32 an der Regelpatrone ab. Die Abdichtung erfolgt bei dieser Version also axial. Bei dieser Modifikation ist außerdem der Mischwasseraustritt in axialer Richtung im Gehäuse vorgesehen. Es sei an dieser Stelle erwähnt, daß das Gehäuse 9 zum leichten Austausch der Regelpatrone, des Schiebers und der Druckfeder mehrteilig ausgeführt ist.

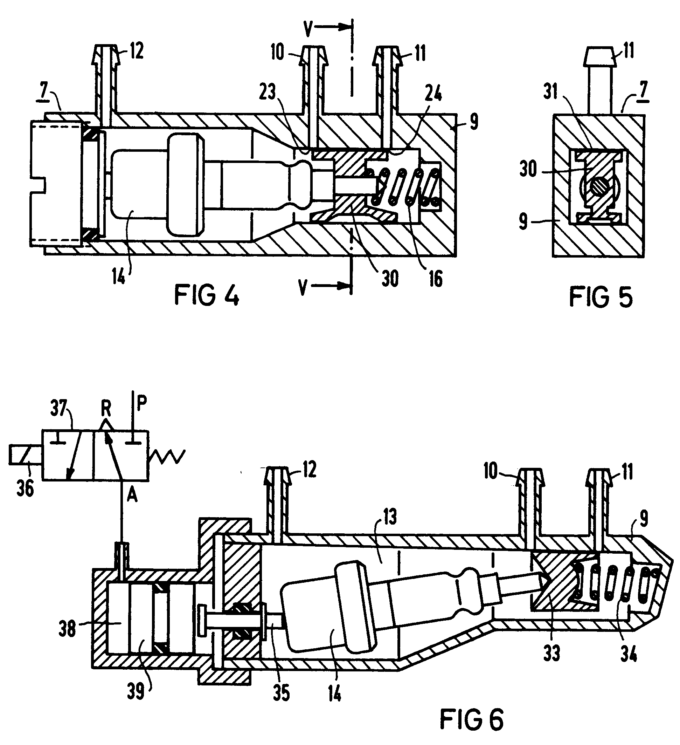

Die Figuren 4 und 5 zeigen im Längs- und Querschnitt eine Ausführungsform, bei der die Regelpatrone 14 mit einem Flachschieber 30 gekuppelt ist, der, wie die Figur 5 im Querschnitt zeigt, mit planen Gleit- und Dichtflächen 31 die Zulauföffnungen 23, 24 wenigstens teilweise freigibt bzw. verschließt. Das Gehäuse 9 ist zu diesem Zweck zumindest im Bereich der Bewegung des Flachschiebers nicht rotationssymmetrisch, sondern mit entsprechend planen Gegenflächen versehen. Diese Ausführungsform hat den Vorteil, daß keine engen Fertigungstoleranzen eingehalten werden müssen und auch die Gefahr einer Verschmutzung der Öffnungen gering ist.

Die Figur 6 zeigt eine besonders einfach aufgebaute Ausführungsform. Die Regelpatrone 14 und eine Druckfeder 32 sind hier in einem flachen spitzen Winkel relativ zu einem ebenfalls als Flachschieber ausgebildeten Schieber 33 angeordnet. Durch eine solche Schrägstellung der Regelpatrone und der Feder 32 ergibt sich eine senkrecht zur Längssymmetrieachse 3 des Schiebers wirkende Kraftkomponente, die bewirkt, daß der Flachschieber 33 mit seiner den Anschlüssen 10, 11 zugewandten Gleitfläche gegen die entsprechende Gegenfläche der Kammer 13 gedrückt wird. Auch bei dieser Ausführung sind keine engen Fertigungstoleranzen einzuhalten.

Im Gegensatz zu den zuvor beschriebenen Ausführungsformen, bei denen der Anteil des einströmenden Kalt- und Warmwassers und damit die Mischwassertemperatur durch eine Stellschraube (Pos. 17 in Fig. 2) zwar veränderbar ist, die eingestellte Mischtemperatur aber danach in der Regel nicht mehr verändert wird, ist bei den nachfolgend anhand der Figuren 6 bis 8 beschriebenen Ausführungsform eine Möglichkeit vorgesehen, um die Mischwassertemperatur betriebsmäßig, also während des Gebrauchs der Instrumente 1 und 2 bzw. der Mundglasfülleinrichtung 3, steuern bzw. regeln zu können.

Bei der Ausführungsform nach Figur 6 ist durch einen zusätzlichen Stift 35 eine definierte Temperaturabsenkung möglich. Dies ist von Vorteil bei Instrumenten mit unterschiedlichen Anforderungen an die Wassertemperatur. Die Betätigung des Stiftes 35 kann mittels eines durch Willensakt ausgelösten Stellgliedes erfolgen. Dieses Stellglied kann mechanisch, elektromechanisch, pneumatisch oder elektropneumatisch betätigt werden. Im vorliegenden Ausführungsbeispiel ist eine elektropneumatische Betätigung gezeigt, bei der mittels eines Elektromagneten 36 ein Zweiwegeventil 37 verstellt wird, wobei Druckluft in eine Kammer 38 geleitet wird, die einen Kolben 39 axial verstellt, gegen den der Stift 35 anliegt. Über diese Verstellung kann die Regelpatrone und damit, wie eingangs erläutert, der Kalt- bzw. Warmwasserzulauf und damit das Mischungsverhältnis von Kaltund Warmwasser zu einem beliebigen Zeitpunkt und mit beliebiger Temperatureinstellung eingestellt bzw. geändert werden.

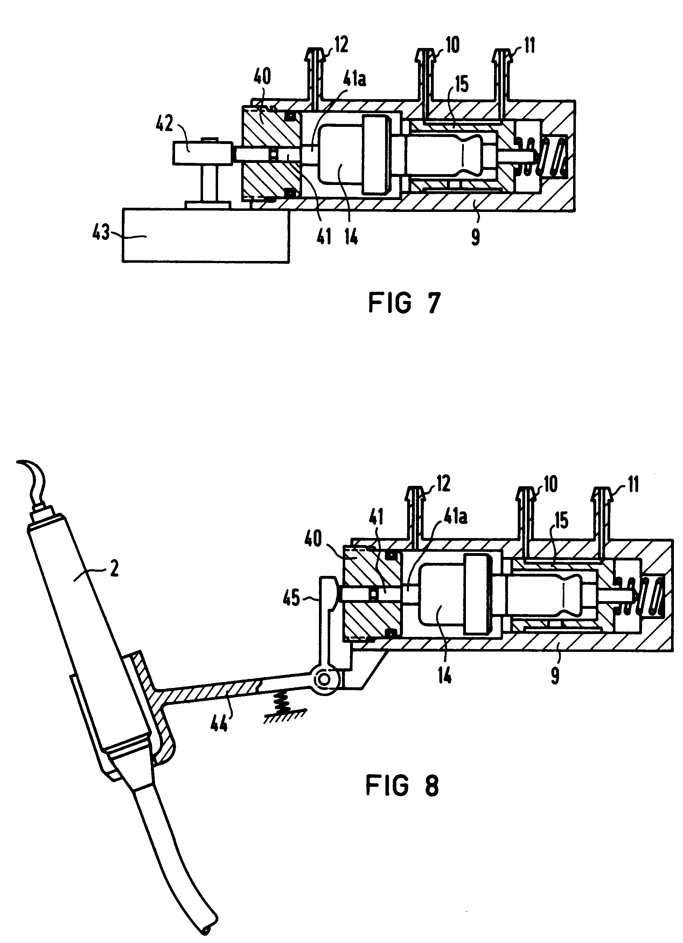

Die Figur 7 zeigt eine Ausführungsform, bei der stirnseitig des Gehäuses 9 ein Verschlußstopfen 40 angeordnet ist, in dem zentrisch gelegen ein Stift 41 geführt ist, dessen eines Ende 41a an der Regelpatrone 14 und dessen anderes Ende an einer Kurvenscheibe 42 anliegt, die von einem Stellmotor 43 in Form z.B. eines Schrittmotors oder Servomotors bewegt wird. Die Kurvenscheibe 42 ist so ausgebildet, daß über den Stift 41 die bereits angesprochene spontane Absenkung - bzw. wenn notwendig auch Erhöhung - der Mischwassertemperatur durchgeführt werden kann. Hierzu kann der Stellmotor 43 vorteilhafterweise mit Hilfe eines Steuerprogrammes die entsprechenden Ein- und Ausschaltsignale erhalten. Vorteilhaft kann es auch sein, den Stift 41 direkt in Abhängigkeit von der Benutzung eines Instruments zu steuern, wie dies in Figur 8 dargestellt ist. Das Instrument 2 soll hier ein Instrument mit Eigenerwärmung durch den in ihm enthaltenen Antrieb, z.B. ein Zahnsteinentfernungsinstrument mit Ultraschallschwinger, repräsentieren, bei dessen Gebrauch das zuzuführende Mischwasser eine niedrigere Temperatur haben soll als bei einem anderen Instrument, beispielsweise bei einem Turbinenhandstück, welches an sich keine Mittel zur Erwärmung des Mischwassers beinhaltet. Um bei dem in Figur 8 dargestellten Instrument eine in Abhängigkeit von der Benutzung des Instruments steuerbare Änderung der Mischwassertemperatur zu bekommen, ist die federbelastete Instrumentenablage 44 über einen Hebel 45 mit dem Stift 41 gekuppelt. Bei abgelegtem Instrument kann am Mischwasseranschluß 12 Mischwasser entnommen werden, dessen Temperatur beispielsweise auf das Instrument 1 und die Mundglasfülleinrichtung 3 abgestimmt ist. Wird das Instrument 2 entnommen, so wird mittels Federkraft und Hebel 45 der Stift 41 und damit die Regelpatrone 14 etwas nach rechts verschoben, wodurch sich der Anteil an Kaltwasser erhöht und der von Warmwasser verkleinert und damit eine ewtwas niedrigere Mischwassertemperatur einstellt.

**Patentansprüche**

1. Zahnärztliche Einrichtung mit einer Regeleinrichtung zur Konstanthaltung der Temperatur von erwärmtem Wasser, welches über Zuleitungen (5, 6) zu diversen Verbrauchern (1, 2, 3), insbesondere zu zahnärztlichen Instrumenten (1,2) geleitet wird, enthaltend:

   a) ein Gehäuse (9) mit einer Kammer (13), welche einerseits zwei benachbart angeordnete, mit Kalt- und Warmwasserzufuhrleitungen (5, 6) verbundene Eintrittsöffnungen (23, 24) und andererseits eine mit einer Leitung (4) für das austretende Mischwasser verbundene Austrittsöffnung aufweist,

   b) eine in der Kammer (13) angeordnete Regelpatrone (14), welche einen Dehnstoffkörper (18) und ein mit diesem gekuppeltes Stellglied (19) enthält, wobei die Regelpatrone in der Kammer so angeordnet ist, daß der Dehnstoffkörper (18) nahe der Austrittsöffnung für das Mischwasser und das Stellglied nahe der Eintrittsöffnungen (23, 24) für das Kalt- und Warmwasser liegt, und

c) einen mit dem Stellglied (19) verbundenen Schieber (15, 30), der in Abhängigkeit von der Dehnung des Dehnstoffkörpers (18) und damit der Verstellung des Stellgliedes (19) den Zulauf für das Kalt- und Warmwasser in die Kammer (13) steuert, indem dieser bei Verstellung die in die Kammer einmündenden Öffnungen (23, 24) für das Kalt- und Warmwasser wenigstens teilweise verschließt bzw. freigibt, wobei der Schieber (15, 30) mittels Druckfeder (16) gegen einen Anschlag (22) der Regelpatrone (14) und diese ihrerseits gegen einen Anschlag (21) im Gehäuse (9) gedrückt wird, der eine bestimmte Öffnungs- und Schließstellung des Schiebers bezüglich der Kalt- und Warmwasserzulauföffnungen (23, 24) definiert,

d) ein Einstellglied (17, 35, 41), mit dem der gehäuseseitige Anschlag (21) verstellbar ist, und

e) in Abhängigkeit von der Benutzung des Verbrauchers (1, 2, 3) aktivierbare Steuermittel (36bis 39; 42, 43; 44, 45), welche das Einstellglied (17, 35, 41) auf den Verbrauchern (1, 2, 3) zugeordnete Anschlagwerte einstellen.

2. Einrichtung nach Anspruch 1, **dadurch gekennzeichnet,** daß als Einstellglied ein mit Hilfe einer durch einen Willensakt auslösbaren Hilfskraft betätigbarer Stößel (35, 41) vorgesehen ist.

3. Einrichtung nach Anspruch 2, **dadurch gekennzeichnet,** daß zur Verstellung des Stößels (35, 41) ein pneumatisch gesteuerter Kolben (39) vorgesehen ist.

4. Einrichtung nach Anspruch 2, **dadurch gekennzeichnet,** daß zur Verstellung des Stößels (41) ein Stellmotor (43) vorgesehen ist.

5. Einrichtung nach Anspruch 2, **dadurch gekennzeichnet,** daß der Stößel (35) in Abhängigkeit von der Entnahme eines Instrumentes (2) aus seiner Ablagevorrichtung (44) durch mechanische Koppelung der Ablagevorrichtung (44) mit dem Stößel (41) betätigt wird.

6. Einrichtung nach Anspruch 1, **dadurch gekennzeichnet,** daß die Regelpatrone (14) und der Schieber (15, 30) in der Kammer (13) so angeordnet sind, daß deren Symmetrieachsen in einer Ebene liegen.

7. Einrichtung nach Anspruch 1, **dadurch gekennzeichnet,** daß der Schieber (30) in der Kammer (13) spielfrei angeordnet ist und die Regelpatrone (14) sowie eine den Schieber gegen die Regelpatrone drückende Druckfeder (34) gegenüber der Symmetrieachse des Schiebers unter einem flachen spitzen Winkel derart schräg eingebaut sind, daß infolge einer senkrecht zur Längsachse des Schiebers wirkenden Kraftkomponente der Schieber mit einer Gleit- und Dichtfläche (31) gegen Wandungsflächen der Kammer, an der die Zufuhröffnungen (23, 24) münden, angedrückt wird.

8. Einrichtung nach Anspruch 7, **dadurch gezeichnet,** daß der Schieber (30) als Flachschieber mit planer Gleit- und Dichtfläche (31) zumindest im Bereich der ebenfalls mit planer Fläche ausmündenden Zulauföffnungen (23, 24) ausgebildet ist.

9. Einrichtung nach Anspruch 1, **dadurch gekennzeichnet,** daß der Schieber (15) mit peripheren Wandungen radial in die Kammer (13) mündende Öffnungen (23,24) des Kalt-und Warmwasserzulaufs (10, 11) verschließt bzw. freigibt.

10. Einrichtung nach Anspruch 1, **dadurch gekennzeichnet,** daß der Schieber mit stirnseitigen Wandungen und mit diesen korrespondierenden Gehäuseflächen in axialer Richtung veränderbare Spalte (27, 28) für den Zulauf von Kalt-und Warmwasser in die Kammer verschließt bzw. freigibt.

11. Einrichtung nach Anspruch 10, **dadurch gekennzeichnet,** daß der Schieber (15) zwischen zwei Druckfedern (16,32) eingesetzt ist, von denen sich die eine (16) am Gehäuse (9) und die andere (32) an einer Schulter der Regelpatrone abstützt.

12. Einrichtung nach Anspruch 1, **dadurch gekennzeichnet,** daß die Regelpatrone (14) in der Kammer (13) so abgestützt ist, daß eine vollständige Umspülung der Mantelfläche der Regelpatrone gegeben ist.

13. Einrichtung nach Anspruch 12, **dadurch gekennzeichnet,** daß das Gehäuse (9) einen axialen oder achsparallelen Ausgang (29) für den Austritt des geregelten Mischwassers enthält.

**Claims**

1. Dental device with a controlling device for keeping the temperature of heated water constant, which is conducted via feed lines (5, 6) to diverse consuming devices (1, 2, 3), in particular to dental instruments (1,2), containing:

a) a housing (9) with a chamber (13), which has on one side two inlet openings (23, 24) arranged adjacently and connected to hot and cold water supply lines (5, 6) and on the other side an outlet opening connected to a line (4) for the issuing mixed water,

b) a control cartridge (14) arranged in the chamber (13), which comprises a body of expanding material (18) and a setting element (19) coupled thereto, whereby the control cartridge is arranged in the chamber in such a way that the body of expanding material (18) lies close to the outlet opening for the mixed water and the setting element lies close to the inlet openings (23, 24) for the hot and cold water, and

c) a slide (15, 30) connected to the setting element (19), which slide, dependent upon the expansion of the body of expanding material (18) and thus the setting of the setting element (19), controls the supply of the hot and cold water into the chamber (13), in that upon setting it at least partially opens or closes the openings (23, 24) for the hot and cold water, which openings open into the chamber, whereby the slide (15, 30) is pressed by means of a compression spring (16) against a stop (22) of the control cartridge (14) which for its part is pressed against a stop (21) in the housing (9), which defines a certain opening and closing setting of the slide with respect to the hot and cold water supply openings (23, 24),

d) a setting element (17, 35, 41) with which the stop (21) on the part of the housing can be adjusted, and

e) dependent upon the use of the consuming device (1, 2, 3) control means (36 to 39; 42, 43; 44, 45) which can be activated and which adjust the setting element (17, 35, 41) to stop values associated with the consuming devices (1, 2, 3).

2. Device according to claim 1,
characterized in that a push rod (35, 41) is provided as the setting element, the push rod (35, 41) being operable with the aid of auxiliary force which can be initiated by an act of volition.

3. Device according to claim 2,
characterized in that a pneumatically controlled piston (39) is provided to adjust the push rod (35, 41).

4. Device according to claim 2,
characterized in that an adjusting motor (43) is provided to adjust the push rod (41).

5. Device according to claim 2,
characterized in that the push rod (35), dependent upon the removal of an instrument (2) from its storing device (44), is actuated by mechanical coupling of the storing device (44) with the push rod (41).

6. Device according to claim 1,
characterized in that the control cartridge (14) and the slide (15, 30) are arranged in the chamber (13) in such a way that their symmetry axes lie in one plane.

7. Device according to claim 1,
characterized in that the slide (30) is arranged in the chamber (13) in a clearance-free manner and the control cartridge (14) as well as a compression spring (34) pressing the slide against the control cartridge are installed at a flat acute angle with regard to the symmetry axis of the slide, inclined in such a way that, as a consequence of a force component acting perpendicularly to the longitudinal axis of the slide, a sliding and sealing surface (31) of the slide is pressed against the wall surfaces of the chamber at which the supply openings (23, 24) open.

8. Device according to claim 7,
characterized in that the slide (30) is constructed as a flat slide with a plane sliding and sealing surface (31), at least in the region of the supply openings (23, 24) which likewise open with a plane surface.

9. Device according to claim 1,
characterized in that with peripheral walls the slide (15) closes or opens openings (23,24) of the hot and cold water supply (10, 11) opening radially into the chamber (13).

10. Device according to claim 1,
characterized in that with walls on the face and with housing surfaces corresponding therewith the slide closes or opens gaps (27, 28), which are variable in the axial direction, for the supply of hot and cold water into the chamber.

11. Device according to claim 10,

characterized in that the slide (15) is disposed between two compression springs (16,32), one (16) of which is supported on the housing (9) and the other (32) on a shoulder of the control cartridge.

12. Device according to claim 1,
characterized in that the control cartridge (14) is supported in the chamber (13) in such a way that water washes completely around the casing surface of the control cartridge.

13. Device according to claim 12,
characterized in that the housing (9) contains an axial or axis-parallel exit (29) for the issue of the regulated mixed water.

**Revendications**

1. Appareil de dentisterie comportant un dispositif de réglage visant à maintenir constante la température de l'eau chaude qui est envoyée par l'intermédiaire de canalisations d'amenée (5,6) à divers appareils d'utilisation (1,2,3), notamment à des instruments de dentisterie (1,2), et comprenant :

a) un boîtier (9) pourvu d'une chambre (13), qui comporte, d'une part, deux ouvertures voisines d'entrée (23,24), raccordées à des canalisations (5,6) d'amenée d'eau froide et d'eau chaude, et, d'autre part, une ouverture de sortie raccordée à une canalisation (4) pour l'eau mélangée sortante,

b) une cartouche de réglage (14), qui est disposée dans la chambre (13) et comporte un corps en matériau extensible (18) et un organe de réglage (19) accouplé à ce corps, la cartouche de réglage étant disposée dans la chambre de telle sorte que le corps en matériau extensible (18) est situé à proximité de l'ouverture de sortie pour l'eau mélangée et que l'organe de réglage est situé à proximité des ouvertures d'entrée (23,24) pour l'eau froide et l'eau chaude, et

c) un tiroir (15,30), qui est raccordé à l'organe de réglage (19) et commande, en fonction de la dilatation du corps en matériau extensible (18) et par conséquent du déplacement de l'organe de réglage (19), l'admission pour l'eau froide et l'eau chaude dans la chambre (13), par le fait que lors du déplacement, cet organe ferme ou libère au moins partiellement les ouvertures (23,24), qui débouchent dans la chambre, pour l'eau froide et l'eau chaude, le tiroir (15,30) étant repoussé au moyen d'un ressort de pression (16) contre une butée (22) de la cartouche de réglage (14) et cette dernière étant pour sa part repoussée contre une butée (21) située dans le boîtier (9) et qui définit une position ouverte et fermée déterminée du tiroir par rapport aux ouvertures (23,24) d'amenée d'eau froide et d'eau chaude,

d) un organe de réglage (17,35,41), à l'aide duquel la butée (29) située sur le boîtier est déplaçable, et

e) des moyens de commande (36 à 39; 42,43; 44,45), qui peuvent être activés en fonction de l'utilisation de l'appareil de consommation (1,2,3) et qui règlent l'organe de réglage (17,35,41) sur des valeurs de butée associées aux appareils de consommation (1,2,3).

2. Dispositif suivant la revendication 1, caractérisé par le fait qu'il est prévu, comme organe de réglage, un poussoir (35,41) pouvant être actionné au moyen d'une force auxiliaire pouvant être déclenchée selon un acte volontaire.

3. Dispositif suivant la revendication 2, caractérisé par le fait que pour le déplacement du poussoir (35,41), il est prévu un piston (39) à commande pneumatique.

4. Dispositif suivant la revendication 2, caractérisé par le fait que pour le déplacement du poussoir (41), il est prévu un servomoteur (43).

5. Dispositif suivant la revendication 2, caractérisé par le fait que le poussoir (35) est actionné en fonction du prélèvement d'un instrument (2) à partir de son dispositif de support (44), grâce à un couplage mécanique du dispositif de support (44) au poussoir (41).

6. Dispositif suivant la revendication 1, caractérisé par le fait que la cartouche de réglage (14) et le tiroir (15,30) sont disposés dans la chambre (13) de telle sorte que leurs axes de symétrie sont situés dans un plan.

7. Dispositif suivant la revendication 1, caractérisé par le fait que le tiroir (30) est disposé sans jeu dans la chambre (13) et que la cartouche de réglage (14) ainsi qu'un ressort de pression (34), qui repousse le tiroir contre la cartouche de réglage, sont montés obliquement en faisant un faible angle aigu par rapport à l'axe de symétrie du tiroir de sorte qu'en raison d'une composante de force agissant perpendiculairement à la direction longitudinale du tiroir, ce dernier est repoussé par une surface de glissement et d'étanchéité (31) contre des surfaces de la paroi de la chambre, dans lesquelles débouchent les ouvertures d'amenée (23,24).

8. Dispositif suivant la revendication 7, caractérisé par le fait que le tiroir (30) est agencé sous la forme d'un tiroir plat possédant une surface plane de glissement et d'étanchéité (31), au moins dans la zone des ouvertures d'amenée (23,24) qui se terminent également dans une surface plane.

9. Dispositif suivant la revendication 1, caractérisé par le fait que le tiroir (15) obture ou libère, par des parois périphériques, des ouvertures (23,24), qui débouchent radialement dans la chambre (13), du système d'amenée d'eau froide et d'eau chaude (10,11).

10. Dispositif suivant la revendication 1, caractérisé par le fait que le tiroir obture ou libère, par des parois frontales et par des surfaces du boîtier qui correspondent à ces parois, des fentes (27,28) qui peuvent être modifiées dans une direction axiale, pour l'amenée de l'eau froide et de l'eau chaude dans la chambre.

11. Dispositif suivant la revendication 10, caractérisé par le fait que le tiroir (15) est inséré entre deux ressorts de pression (16,32), dont l'un (16) prend appui sur le boîtier (9) et dont l'autre (32) prend appui sur un épaulement de la cartouche de réglage.

12. Dispositif suivant la revendication 1, caractérisé par le fait que la cartouche de réglage (14) prend appui dans la chambre (13) de telle sorte qu'on obtient un balayage complet de la surface enveloppe de la cartouche de réglage.

13. Dispositif suivant la revendication 12, caractérisé par le fait que le boîtier (9) comporte une sortie axiale ou parallèle à l'axe (29) pour la sortie de l'eau mélangée réglée.

## FIG 1

## FIG 2

## FIG 3

FIG 4

FIG 5

FIG 6

FIG 7

FIG 8